(19) Europäisches Patentamt / European Patent Office / Office européen des brevets

(11) **EP 3 177 957 B1**

(12) **EUROPÄISCHE PATENTSCHRIFT**

(45) Veröffentlichungstag und Bekanntmachung des Hinweises auf die Patenterteilung:
**20.04.2022 Patentblatt 2022/16**

(21) Anmeldenummer: **15745503.1**

(22) Anmeldetag: **05.08.2015**

(51) Internationale Patentklassifikation (IPC):
**G02B 21/00** *(2006.01)* **G02B 27/58** *(2006.01)*
**G01N 21/64** *(2006.01)*

(52) Gemeinsame Patentklassifikation (CPC):
**G01N 21/6458; G02B 21/0032; G02B 21/0076; G02B 21/008; G02B 27/58**

(86) Internationale Anmeldenummer:
**PCT/EP2015/068113**

(87) Internationale Veröffentlichungsnummer:
**WO 2016/020459 (11.02.2016 Gazette 2016/06)**

(54) **HOCHAUFLÖSENDE SCANNING-MIKROSKOPIE MIT DER UNTERSCHEIDUNG MINDESTENS ZWEIER WELLENLÄNGENBEREICHE**

HIGH-RESOLUTION SCANNING MICROSCOPY WITH DISCRIMINATION BETWEEN AT LEAST TWO WAVELENGTH RANGES

MICROSCOPIE À BALAYAGE À HAUTE RÉSOLUTION DISTINGUANT AU MOINS DEUX PLAGES DE LONGUEURS D'ONDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.08.2014 DE 102014111167**

(43) Veröffentlichungstag der Anmeldung:
**14.06.2017 Patentblatt 2017/24**

(73) Patentinhaber: **Carl Zeiss Microscopy GmbH**
**07745 Jena (DE)**

(72) Erfinder:
• **KLEPPE, Ingo**
**07749 Jena (DE)**
• **NETZ, Ralf**
**07745 Jena (DE)**
• **NOVIKAU, Yauheni**
**99510 Apolda (DE)**

(74) Vertreter: **Patentanwälte Geyer, Fehners & Partner mbB**
**Perhamerstrasse 31**
**80687 München (DE)**

(56) Entgegenhaltungen:
EP-A1- 2 037 255    EP-A1- 2 317 362
EP-A2- 2 253 983    WO-A1-02/14811
WO-A1-2013/135487    DE-A1-102012 023 024

## Beschreibung

Die Erfindung bezieht sich auf ein Verfahren zur hochauflösenden Scanning-Mikroskopie einer Probe, wobei die Probe mit Beleuchtungsstrahlung derart zur Abgabe von Fluoreszenzstrahlung angeregt wird, dass die Beleuchtungsstrahlung an einen Punkt in oder auf der Probe zu einem beugungsbegrenzten Beleuchtungsfleck gebündelt wird, der Punkt beugungsbegrenzt in ein Beugungsbild auf einen ortsauflösenden Flächendetektor abgebildet wird, wobei der Flächendetektor eine Ortsauflösung aufweist, die eine Beugungsstruktur des Beugungsbildes auflöst, der Punkt relativ zur Probe in verschiedene Scanpositionen mit einer Schrittweite verschoben wird, die kleiner ist als der halbe Durchmesser des Beleuchtungsflecks, der Flächendetektor ausgelesen und aus den Daten des Flächendetektors und aus den diesen Daten zugeordneten Scanpositionen ein Bild der Probe erzeugt wird, das eine Auflösung aufweist, die über eine Auflösungsgrenze der Abbildung gesteigert ist.

Die Erfindung bezieht sich weiter auf ein Mikroskop zur hochauflösenden Scanning-Mikroskopie mit einem Probenraum zur Aufnahme einer Probe, die zur Abgabe von Fluoreszenzstrahlung anregbar ist, einer Optik, die ein im Probenraum liegende Fokalebene und eine Auflösungsgrenze hat, einer Beleuchtungseinrichtung, die einen Eingang zum Zuführen von Beleuchtungsstrahlung aufweist und die über die Optik den Probenraum mit der Beleuchtungsstrahlung derart beleuchtet, dass die Optik die Beleuchtungsstrahlung an einem Punkt in der Fokalebene zu einem beugungsbegrenzten Beleuchtungsfleck bündelt, einer Abbildungseinrichtung zum beugungsbegrenzten Abbilden des Punktes in der Fokalebene durch die Optik in ein Beugungsbild auf einem ortsauflösenden Flächendetektor, der in einer zur Fokalebene konjugierten Detektorebene liegt, wobei der Flächendetektor eine Ortsauflösung aufweist, die eine Beugungsstruktur des Beugungsbildes auflöst, einer Scaneinrichtung zur Verschiebung des Punktes in verschiedene Scanpositionen mit einer Schrittweite, die kleiner ist als ein halber Durchmesser des Beleuchtungsflecks, einer Auswerteeinrichtung zum Auslesen des Flächendetektors, zum Auswerten der Beugungsstruktur des Beugungsbildes aus Daten des Flächendetektors und aus den diesen Daten zugeordneten Scanpositionen und zum Erzeugen eines Bildes der Probe, das eine Auflösung aufweist, die über die Auflösungsgrenze gesteigert ist.

Ein klassisches Anwendungsgebiet der Lichtmikroskopie zur Untersuchung von biologischen Präparaten ist die Lumineszenzmikroskopie. Hierbei werden bestimmte Farbstoffe (sogenannte Phosphore oder Fluorophore) zur spezifischen Markierung von Proben, z.B. von Zellteilen, verwendet. Die Probe wird mit Anregungsstrahlung darstellender Beleuchtungsstrahlung beleuchtet und die dadurch angeregte Lumineszenzstrahlung mit geeigneten Detektoren erfasst. Durch dieses Vorgehen ist die Darstellung einzelner, verschieden gefärbter Zellteile im Mikroskop möglich. Natürlich können auch mehrere Teile eines Präparates gleichzeitig mit verschiedenen, sich spezifisch an unterschiedliche Strukturen des Präparates anlagernden Farbstoffen eingefärbt werden. Dieses Verfahren bezeichnet man als Mehrfachlumineszenz. Auch kann man Proben vermessen, die per se, also ohne Farbstoffzugabe lumineszieren.

Lumineszenz wird hier, wie allgemein üblich, als Oberbegriff für Phosphoreszenz und Fluoreszenz verstanden, erfasst also beide Prozesse. Soweit hier von Fluoreszenz gesprochen wird, ist das pars pro toto und nicht einschränken zu verstehen.

Zur Probenuntersuchung ist es auch bekannt, Laser-Scanning-Mikroskope (auch LSM abgekürzt) zu verwenden, die mittels einer konfokalen Detektionsanordnung (dann spricht man von einem konfokalen LSM) oder einer nichtlinearen Probenwechselwirkung (sogenannte Multiphotonenmikroskopie) nur diejenige Ebene abbilden, die sich in der Fokusebene des Objektives befindet. Es wird ein optischer Schnitt gewonnen, und die Aufzeichnung mehrerer optischer Schnitte in verschiedenen Tiefen der Probe erlaubt es, ein dreidimensionales Bild der Probe zu generieren, das aus den verschiedenen optischen Schnitten zusammengesetzt ist. Die Laser-Scanning-Mikroskopie ist somit zur Untersuchung von dicken Präparaten geeignet. Natürlich wird auch eine Kombination von Lumineszenzmikroskopie und Laser-Scanning-Mikroskopie verwendet, bei der eine lumineszierende Probe in verschiedenen Tiefenebenen mit Hilfe eines LSM abgebildet wird.

Prinzipiell ist die optische Auflösung eines Lichtmikroskopes, auch die eines LSM, durch die physikalischen Gesetze beugungsbegrenzt. Der Begriff "hochauflösend" wird hier für Auflösungen jenseits der Beugungsgrenze verwendet.

Die US-A-5043570 beschreibt einen Versuch, die Auflösung durch "oversampling" zu erhöhen. Dies führt nicht zu einer deutlich verbesserten Auflösung unterhalb der Beugungsgrenze des Mikroskopes.

Mit Hilfe nicht-linearer Entvölkerungsprozesse kann die Auflösung auf einen Faktor von bis zu 10 gegenüber einem beugungsbegrenzten konfokalen LSM angehoben werden. Ein solches Verfahren ist beispielsweise in der US-A-5866911 beschrieben. Für die Entvölkerungsprozesse sind verschiedene Ansätze bekannt, beispielsweise wie in der DE-B-4416558, US-A-6633432  oder DE-A-10325460 beschrieben.

Ein weiteres hochauflösendes Mikroskopieverfahren wird in US-A-5867604 angesprochen, in der ein Objekt mit einer periodischen Struktur abgetastet wird. Ein ähnliches Verfahren zur Auflösungssteigerung wird in der EP-B-1157297 angesprochen. Strukturierte Beleuchtung nutz nichtlineare Prozesse, z.B. eine Sättigung der Fluoreszenz. Der Ansatz erfordert einen Rekonstruktionsalgorithmus zur Bilderzeugung und die Verwertung mehrerer Aufnahmen für ein Bild.

Ein Verfahren, das im Weitfeld eine Hochauflösung erreicht, ist aus der WO-A-2006127692 und der DE-A-102006021317 bekannt. Dieses mit PALM abgekürzte Verfahren (Photo Activated Light Microscopy) verwendet eine Markierungssubstanz, welche mittels eines optischen Aktivierungssignals aktiviert werden kann. Nur im aktivierten Zustand kann die Markierungssubstanz mit Anregungsstrahlung zur Abgabe von bestimmter Fluoreszenzstrahlung angeregt werden. Die Aktivierung wird so vorgenommen, dass zumindest ein gewisser Anteil der aktivierten Markierungsmoleküle von benachbarten aktivierten Molekülen so beabstandet sind, dass sie gemessen an der optischen Auflösung der Mikroskopie getrennt oder nachträglich trennbar sind. Nach Aufnahme der Lumineszenzstrahlung wird für diese isolierten Moleküle dann das Zentrum deren auflösungsbegrenzt bedingter Strahlungsverteilung ermittelt und daraus rechnerisch die Lage der Moleküle mit höherer Genauigkeit bestimmt, als es die optische Abbildung eigentlich zulässt. Zur Abbildung der gesamten Probe wird die Isolierung der Markierungsmoleküle der Teilmenge durch Einbringen der Aktivierungsstrahlung, nachfolgende Anregung und Fluoreszenzstrahlungsabbildung so lange wiederholt, bis möglichst alle Markierungsmoleküle einmal in einer Teilmenge enthalten und isoliert waren.

Weitere hochauflösende Verfahren sind in Hell, "Far-Field Optical Nanoscopy", Science 316, 1153 - 1158, 2007, beschrieben.

Ein gattungsgemäßes Verfahren und Mikroskop ist aus der EP-A-2317362 und der WO-A-2013/135487 bekannt. Diese gattungsbildende Druckschrift kombiniert in der dort in Fig. 5 dargestellten und beschriebenen Ausführungsform eine beugungsbegrenzte Beleuchtung der Probe mit einem Flächendetektor, wobei eine Scaneinrichtung so ausgebildet ist, dass das Beugungsbild des mit dem Beleuchtungsfleck beleuchteten Punktes auf dem Flächendetektor ruht. Man bezeichnet diese Anordnung als sogenannte "de-scanned" Detektoranordnung. Sie wird üblicherweise dadurch erreicht, dass zwischen dem Vereinigungspunkt zwischen Beleuchtungseinrichtung und Abbildungseinrichtung und der Probe ein Scanner angeordnet ist, der den Strahlengang ablenkt. Ein solcher Scanner wirkt dann sowohl auf den Beleuchtungsfleck als auch auf die beugungsbegrenzte Abbildung des mit dem Beleuchtungsfleck beleuchteten Punktes, so dass in Abbildungsrichtung nach dem Scanner der Strahlengang ruht. Eine Alternative zu einem solchen Scanner ist die Verwendung eines bewegbaren Probentischs, der die Probe verschiebt. Auch dann ruht das Beugungsbild auf dem Flächendetektor. Im Konzept der EP-A-2317362 ist der Flächendetektor mit einer Ortsauflösung versehen, die bezogen auf den Abbildungsmaßstab eine Überabtastung des Beugungsbildes bewirkt und es somit erlaubt, die Beugungsstruktur des Beugungsbildes abzutasten.

Die EP-A-2317362 sieht eine Ausführungsform vor, bei der eine Farbanalyse möglich ist. Dazu werden mehrere Detektoren vorgesehen, die in entsprechenden Spektralkanälen liegen, welche durch einen dichroitischen Farbteiler gebildet werden. Dieser Ansatz ist für die Laser-Scanning-Mikroskopie schon seit langem bekannt. Er hat jedoch den Nachteil, dass für jeden Farbkanal ein entsprechender Farbteiler mit entsprechendem Detektor nötig ist. Bei der herkömmlichen Laser-Scanning-Mikroskopie, die einen nicht ortsauflösenden Detektor hinter einer konfokalen Lochblende (sogenanntes Pinhole) verwendet, ist diese Anforderung weitgehend unproblematisch; bei der Verwendung eines überabtastenden Flächendetektors gemäß EP-A-2317362 entsteht jedoch ein erheblicher Aufwand, zumal solche Flächendetektoren teuer sind. Zudem müssten im Überabtastungsprinzip gemäß EP-A-2317362 diese mehreren Flächendetektoren sub-pixelgenau zueinander justiert werden, da ansonsten ein Farbfehler zwischen den erzeugten Bildern der einzelnen Farbkanäle entstünde, der dadurch herrührt, dass für die hochauflösenden Bilder die Daten der Flächendetektoren auf die Scanposition, welche in Schritten verschoben wird, die klein gegen den Durchmesser des Beleuchtungsflecks sind, verschoben wird. Nur wenn die Flächendetektoren in allen Farbkanälen zur optischen Achse sub-pixelgenau justiert sind, passen die Bilder der einzelnen Farbkanäle übereinander. Die WO-A-214811, EP-A-2037255 und DE-A-102012023024 betreffen spektrometrische Detektoren in der konfokalen Mikroskopie. Die Spektrometer weisen ein dispersives Element auf, welches die Strahlung in einer Längsrichtung auffächert. Die aufgefächerte Strahlung wird jeweils mit einem zeilenförmigen Detektor erfasst, so dass die Spektralverteilung eines konfokal abgebildeten Punktes erfasst wird.

Der Erfindung liegt deshalb die Aufgabe zugrunde, ein Verfahren bzw. ein Mikroskop der eingangs genannten Art so weiterzubilden, dass eine Farbinformation gewonnen werden kann und zugleich der Justieraufwand für mehrere Farbkanäle gemindert ist oder sogar entfällt.

Die Erfindung ist in den Ansprüchen 1 und 7 definiert.

In einem Verfahren zur hochauflösenden Scanning-Mikroskopie einer Probe wird die Probe mit Beleuchtungsstrahlung derart zur Abgabe von Fluoreszenzstrahlung angeregt, dass die

Beleuchtungsstrahlung an einen Punkt in oder auf der Probe zu einem beugungsbegrenzten Beleuchtungsfleck gebündelt wird, wird der Punkt beugungsbegrenzt in ein Beugungsbild auf einen ortsauflösenden Flächendetektor abgebildet, wobei der Flächendetektor eine Ortsauflösung aufweist, die eine Beugungsstruktur des Beugungsbildes auflöst, wird der Punkt relativ zur Probe in verschiedene Scanpositionen mit einer Schrittweite verschoben, die kleiner ist als der halbe Durchmesser des Beleuchtungsflecks, der Flächendetektor ausgelesen und wird aus den Daten des Flächendetektors und aus den diesen Daten zugeordneten Scanpositionen ein Bild der Probe erzeugt, das eine Auflösung aufweist, die über eine Auflösungsgrenze der Abbildung gesteigert ist, wobei zum Unterscheiden von mindestens zwei vorbestimmten Wellenlängenbereichen in der Fluoreszenzstrahlung von der Probe mittels eines spektral selektives Element auf dem Flächendetektor für die mindestens zwei vorbestimmten Wellenlängenbereiche eine entsprechende Anzahl von Beugungsscheibchen erzeugt werden, die lateral gegeneinander versetzt sind, so dass das Beugungsbild aus den gegeneinander versetzten Beugungsscheibchen besteht, wobei die Beugungsscheibchen vollständig auf dem Flächendetektor liegen, beim Erzeugen des Bildes der Probe die Beugungsscheibchen ausgewertet werden.

Ein Mikroskop zur hochauflösenden Scanning-Mikroskopie mit einem Probenraum zur Aufnahme einer Probe, die zur Abgabe von Fluoreszenzstrahlung anregbar ist, weist auf: eine Optik, die ein im Probenraum liegende Fokalebene und eine Auflösungsgrenze hat, eine Beleuchtungseinrichtung, die einen Eingang zum Zuführen von Beleuchtungsstrahlung aufweist und die über die Optik den Probenraum mit der Beleuchtungsstrahlung derart beleuchtet, dass die Optik die Beleuchtungsstrahlung an einem Punkt in der Fokalebene zu einem beugungsbegrenzten Beleuchtungsfleck bündelt, eine Abbildungseinrichtung zum beugungsbegrenzten Abbilden des Punktes in der Fokalebene durch die Optik in ein Beugungsbild auf einem ortsauflösenden Flächendetektor, der in einer zur Fokalebene konjugierten Detektorebene liegt, wobei der Flächendetektor eine Ortsauflösung aufweist, die eine Beugungsstruktur des Beugungsbildes auflöst, eine Scaneinrichtung zur Verschiebung des Punktes in verschiedene Scanpositionen mit einer Schrittweite, die kleiner ist als der halbe Durchmesser des Beleuchtungsflecks, und eine Auswerteeinrichtung zum Auslesen des Flächendetektors, zum Auswerten der Beugungsstruktur des Beugungsbildes aus Daten des Flächendetektors und aus den diesen Daten zugeordneten Scanpositionen und zum Erzeugen eines Bildes der Probe, das eine Auflösung aufweist, die über die Auflösungsgrenze gesteigert ist, wobei das Mikroskop zum Unterscheiden von mindestens zwei vorbestimmten Wellenlängenbereichen in der Fluoreszenzstrahlung von der Probe ein spektral selektives Element aufweist, das auf dem Flächendetektor für die mindestens zwei vorbestimmten Wellenlängenbereiche eine entsprechende Anzahl von Beugungsscheibchen erzeugt, die lateral gegeneinander versetzt sind, so dass das Beugungsbild aus den gegeneinander versetzten Beugungsscheibchen besteht, wobei der Flächendetektor und das spektral selektive Element so ausgebildet sind, dass die Beugungsscheibchen vollständig auf dem Flächendetektor liegen, und die Auswerteeinrichtung beim Erzeugen des Bildes der Probe die Beugungsscheibchen auswertet.

Die Erfindung erreicht eine simultane Auflösungssteigerung und eine spektrale Bildinformation mit nur einem Flächendetektor, indem das Beugungsbild auf dem Detektor in mindestens zwei gegeneinander verschobene Beugungsscheibchen aufgeteilt wird. Dazu wird ein spektral selektives Element verwendet. Jedes Beugungsscheibchen ist einem Wellenlängenbereich (auch als Farbkanal bezeichnet) zugeordnet.

Das Verfahren und das Mikroskop erlauben es damit, mindestens zwei Wellenlängenbereiche zu unterscheiden. Das Bild der Probe entsteht LSM-üblich durch Abtasten der Probe mit dem Spot aus einer Vielzahl von Einzelbildern, die jeweils einem anderen Abtastort, also einer anderen Scanposition, zugeordnet sind.

Ein Beugungsscheibchen entsteht bei der Beugung eines optischen Strahls an einer kreisförmigen Blende. Es erscheint ein zentrales Maximum, das Beugungsscheibchen, das umgeben ist von Ringen abnehmender Strahlungsintensität. Selbst ein nach den Gesetzen der geometrischen Optik perfektes Mikroskop, also auch ohne Abbildungsfehler, kann einen Punkt nicht genau auf einen Punkt abbilden, sondern durch die Beugung des Lichts an der Apertur nur auf einen unscharfen Fleck. Dies wird als beugungsbegrenzte Abbildung bezeichnet. Gleiches gilt bei beugungsbegrenzter Beleuchtung eines Punktes. Zwei Punkte lassen sich in klassischer Strahlenoptik nach dem sog. Rayleigh-Kriterium trennen, wenn die Maxima ihrer Abbilder im Beugungsbild mindestens um den Radius r des Beugungsscheibchens auseinander liegen. Die Form des Flecks hängt reziprok von der Form der Apertur ab, insbesondere ist seine Größe umgekehrt proportional zur Größe der Apertur. Die Größe des Beugungsscheibchens ergibt sich aus der ersten Nullstelle der Besselfunktion erster Art, die bei etwa $r = 0{,}6098$ liegt. Das Beugungsscheibchen (also der zentrale Beugungsfleck) wird nach dem englischen Astronomen George Biddell Airy auch Airy-Scheibchen genannt. Im Scanning-Mikroskop ist sowohl bei Beleuchtung als auch bei Abbildung die Apertur, gegeben durch die runde Fassung der Optiken, kreisförmig. Da Größe des Beugungsscheibchens zudem von der Wellenlänge abhängt, ist es bei der zu Anregung dienenden beugungsbegrenzten Beleuchtung kleiner als bei der stokesverschobenen, also langwelligeren Fluoreszenzstrahlung.

Der Begriff "beugungsbegrenzt" soll hier nicht auf die Beugungsgrenze gemäß der Abbe'schen Theorie beschränkt sein, sondern auch Fälle erfassen, in denen auf Grund realer Unzulänglichkeiten oder Einschränkungen das theoretische Maximum um 20 % verfehlt wird. Auch dann hat das Einzelbild eine Struktur, die hier als Beugungsstruktur bezeichnet wird. Sie wird überabgetastet.

Um mit einem möglichst kostengünstigen Detektor arbeiten zu können, überlappen sich die Beugungsscheibchen, aber sie überdecken sich nicht vollständig.

Der Überlappbereich sollte dabei bevorzugt so liegen, dass das Zentrum jedes Beugungsscheibchens außerhalb dem/den anderen Beugungsscheibchen liegt/liegen. Das heißt, bei zwei Beugungsscheibchen liegen deren Zentren am Flächendetektor in einem Bereich, der nicht vom anderen Beugungsscheibchen überdeckt wird. Bei mehreren Beugungsscheibchen gilt dies für jedes Beugungsscheibchen. Diese Anforderung kann bei bis zu vier Beugungsscheibchen besonders einfach erfüllt werden.

Die Detektorgröße kann möglichst gering gehalten werden, wenn das spektralselektive Element chromatisch derart ausgebildet ist, dass die gegeneinander versetzten Beugungsscheibchen die gleiche Größe haben. Dies ist, wie oben ausgeführt, aufgrund der wellenlängenabhängigen Größe von Beugungsscheibchen nur dadurch zu erreichen, dass das spektralselektive Element eine entsprechende Größenkorrektur durchführt, die das Beugungsscheibchen eines längerwelligen Wellenlängenbereiches gegenüber einem Beugungsscheibchen eines kurzwelligeren Wellenlängenbereiches verkleinert. Erfolgt eine derartige chromatische Korrektur nicht, sind die Beugungsscheibchen, welche den einzelnen Wellenlängenbereichen zugeordnet sind, unterschiedlich groß, was durch den lateralen Versatz der Beugungsscheibchen nebeneinander dann bevorzugt ausgeglichen ist, um die Zentren der Beugungsscheibchen zu isolieren, d.h. dass sie nicht innerhalb eines anderen Beugungsscheibchens zu liegen kommen. Die Erzeugung der Beugungsscheibchen für die Wellenlängenbereiche kann auf verschiedene Art und Weisen erfolgen. In einer ersten Variante wird das spektralselektive Element bzw. die spektrale Auftrennung vor dem Flächendetektor und nicht in einem Teil des Strahlenganges vorgenommen, durch den auch die Beleuchtungsstrahlung läuft. Die Abbildungsstrahlung durchläuft dann den Strahlengang bis zum spektralselektiven Element, an dem die Auftrennung des Beugungsbildes in die Beugungsscheibchen der einzelnen Wellenlängenbereiche erfolgt. In einer zweiten Variante erfolgt die spektrale Auftrennung in der Beleuchtung bzw. der Beleuchtungseinrichtung so, dass die Abbildung nicht von der spektralen Auftrennung betroffen ist. Auf diese Weise entsteht der Beleuchtungsfleck in der Probe bereits in Form von mehreren lateral gegeneinander versetzten Beugungsscheibchen.

Bei der erstgenannten Variante wirkt die spektrale Auftrennung nur auf die Fluoreszenzantwort der Probe. Bei der zweitgenannten Variante nur auf die Fluoreszenzanregung der Probe. Die erste Variante trennt damit Farbkanäle einer in verschiedenen Farben fluoreszierenden Probe.

Die zweite Variante unterscheidet hingegen Bestandteile der Probe, die bei unterschiedlichen Wellenlängenbereichen anregbar sind. Beiden Varianten ist gemein, dass das spektralselektive Element in einem Teil des Strahlengangs liegt, der nur von der Abbildung oder der Beleuchtung bestrahlt wird, nicht jedoch von beiden. In Abweichung davon ist auch eine Anordnung in einem gemeinsamen Teil des Strahlenganges möglich.

Der Kern der Erfindung liegt darin, die Wellenlängenbereiche räumlich über die Lage der Beugungsscheibchen auf dem Flächendetektor zu unterscheiden. Da am Flächendetektor ein ruhendes Bild vorliegt (sogenannter De-Scanned-Aufbau), ist die Lage der Beugungsscheibchen, welche den entsprechenden Wellenlängenbereichen, die auch als Farbkanäle bezeichnet werden, zugeordnet sind, bekannt, und bei der Erzeugung des Bildes ist eine Entmischung der simultan aufgenommenen Wellenlängenbereiche möglich. Auf diese Weise wird eine simultane Aufnahme mehrerer Farbkanäle mit einem einzigen Flächendetektor möglich.

Da im Rekonstruktionsverfahren gemäß EP-A-2317362 aufgrund der scannenden Verschiebung mit einer Schrittweite, die kleiner ist als die Größe des Beleuchtungsflecks, eine Vielzahl an Messungen für jeden einzelnen Punkt in der Probe vorliegt, ergibt sich eine Überbestimmtheit im aufzustellenden und zu lösenden Gleichungssystem, so dass nicht nur die Ortsangaben und Intensitäten für die einzelnen Punkte mit einer Hochauflösung angegeben werden können, sondern auch die Angabe der Wellenlängenbereiche, d.h. der Farbe.

In einer besonders vorteilhaften Weiterbildung der Erfindung ist die Lage der gegeneinander verschobenen Beugungsscheibchen durch ein einstellbar ausgestaltetes spektralselektives Element anpassbar hinsichtlich der zugeordneten Wellenlängenbereiche. Auf diese Weise kann man die Farbkanäle so einstellen, dass gewünschte Wellenlängenbereiche unterschieden werden.

Das erfindungsgemäße Konzept kann auch in parallelisierter Form für mehrere Flecken gleichzeitig durchgeführt werden, wie dies für die Laserscanningmikroskopie bekannt ist. Es werden dann mehrere Spots auf der Probe scannend abgetastet, und die Einzelbilder der mehreren Spots liegen ruhend in der Detektionsebene nebeneinander. Die nachfolgende Beschreibung konzentriert sich exemplarisch auf die Abtastung mit einem einzelnen Punkt-Fleck. Dies soll jedoch nicht als Einschränkung verstanden werden, und die erläuterten Merkmale und Grundsätze gelten sinngemäß auch für die parallel Abtastung mehrerer Punkt-Flecken wie auch für die Verwendung eines Linienflecks. Letzterer ist natürlich nur quer zur Linienerstreckung beugungsbegrenzt, so dass die diesbezüglichen Merkmale dieser Beschreibung dann nur in einer Richtung (quer zur Linienerstreckung) gelten.

Die Abbildung eines gewünschten Bereichs der Probe erfolgt wie in einem üblichen LSM scannend. Da Beleuchtung und die Abbildung bzw. die entsprechenden Einrichtungen eine gemeinsame optische Scaneinrichtung haben, welche den Beleuchtungsfleck über die Probe führt und zugleich den mit dem Beleuchtungsfleck zusammenfallenden Punkt, an dem die Probe abgebildet wird, in Bezug auf den Detektor wieder descannt, kann man eine Zoomoptik in den gemeinsamen Teil von Beleuchtungs- und Abbildungseinrichtung setzen. Sie erlaubt es, eine Anpassung des Beugungsbildes an die Größe des Flächendetektors vorzunehmen und zusätzlich die verfügbare Beleuchtungsstrahlung ohne Randverluste vollständig in die Objektivpupille, welche sich mit Wahl des Objektives ändern kann, einzukoppeln.

Die Auflösung der Beugungsstruktur des Einzelbildes erlaubt es zusätzlich, eine Bewegungsrichtung des Flecks zu ermitteln, entlang dieser während des Abtastens der Probe verschoben wird. Diese Bewegungsrichtung ist zwar grundsätzlich aus der Mechanik des Scanners (beispielsweise eines Scanspiegels oder eines beweglichen Probentisches) bekannt, jedoch ergeben sich hier mechanisch bedingte Restungenauigkeiten. Diese können eliminiert werden, indem Signale einzelner Pixel des Detektorarrays mittels Kreuzkorrelation ausgewertet werden. Dabei macht man sich zunutze, dass sich, bezogen nebeneinanderliegende Bildpixel in der Probe aufgrund der beugungsbegrenzten Abbildung des beleuchteten Punktes in einem gewissen Maß überlappen, ihre Zentren jedoch nebeneinander liegen. Unterzieht man die Signale solcher Bildpixel einer Kreuzkorrelation, kann man eine Restungenauigkeit, welche aufgrund unvermeidlicher Toleranzen der Scanmechanik verbleibt, reduzieren bzw. vollständig eliminieren.

Soweit hier ein Verfahren beschrieben wird, realisiert ein Steuergerät diese Verfahrensschritte im Betrieb des Mikroskops.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig. 1          eine Schemadarstellung eines Laser-Scanning-Mikroskops zur hochauflösenden Mikroskopie,
Fig. 2          eine vergrößerte Darstellung eines Flächendetektors, der im Mikroskop der Fig. 1 zum Einsatz kommt,
Fig. 3 bis 6    Darstellungen von Beugungsbildern, die beim Betrieb des Mikroskops der Fig. 1 in verschiedenen Ausführungsformen auf dem Flächendetektor auftreten, und
Fig. 7          Darstellungen eines Beleuchtungsbeugungsbildes, das bei der Beleuchtung einer Probe in einer Ausführungsform des Mikroskops der Fig. 1 auftreten kann.

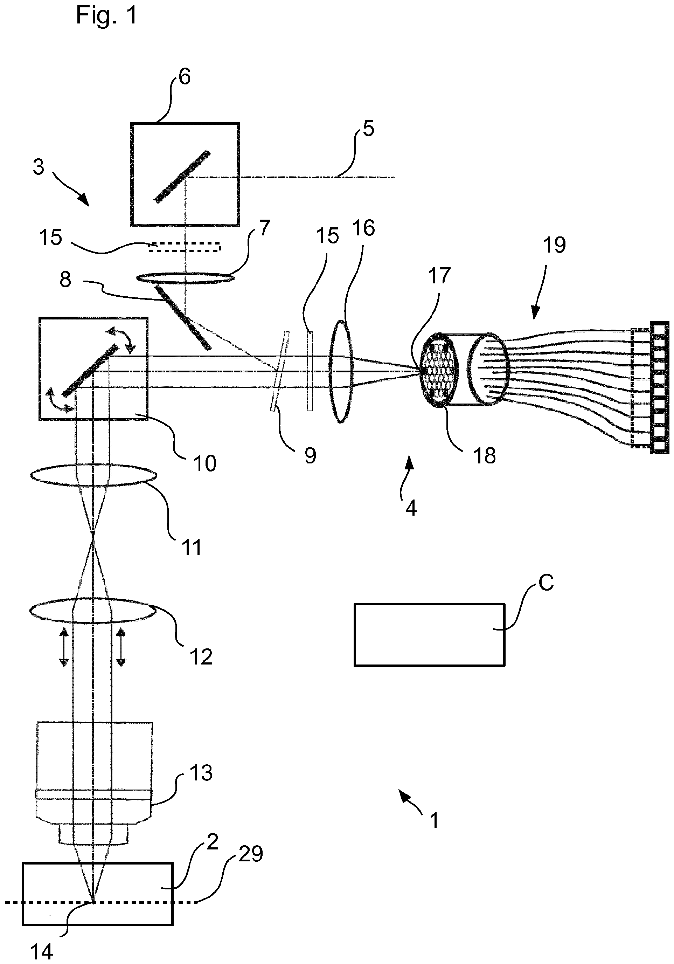

Fig. 1 zeigt schematisch ein Laserscanningmikroskop 1, das zum Mikroskopieren einer Probe 2 ausgebildet ist. Das Laserscanningmikroskop (nachfolgend als LSM abgekürzt) 1 wird von einem Steuergerät C gesteuert und umfasst einen Beleuchtungsstrahlengang 3 sowie einen Abbildungsstrahlengang 4. Der Beleuchtungsstrahlengang beleuchtet einen Spot in der Probe 2, und der Abbildungsstrahlengang 4 bildet diesen Spot beugungsbegrenzt zur Detektion ab. Beleuchtungsstrahlengang 3 und Abbildungsstrahlengang 4 teilen sich eine Optik.

Die Beleuchtung der Probe 2 erfolgt im LSM 1 mittels eines bereitgestellten Laserstrahls 5, der über einen nicht weiter funktionell erforderlichen Umlenkspiegel 6 und eine Linse 7 auf einen Spiegel 8 eingekoppelt wird. Der Spiegel 8 sorgt dafür, dass der Laserstrahl 5 unter einem Reflexionswinkel auf ein Einkoppelelement, z.B. einen Emissionsfilter 9 fällt. Zur übersichtlicheren Darstellung ist für den Laserstrahl 5 lediglich dessen Hauptachse eingezeichnet.

Nach Reflexion am Emissionsfilter 9 wird der Laserstrahl 5 von einem Scanner 10 zweiachsig abgelenkt und mittels Linsen 11 und 12 durch ein Objektiv 13 als beugungsbegrenzter Beleuchtungsfleck 14 in eine Fokalebene 29 in der Probe 2 fokussiert. Der Beleuchtungsfleck 14 ist dabei in der Darstellung der Fig. 1 punktförmig, es ist jedoch auch ein linienförmiger Beleuchtungsfleck möglich. Fluoreszenzstrahlung, die am Ort (z. B. Punkt) des Beleuchtungsfleck 14 angeregt wurde, wird aus der Fokalebene 29 über das Objektiv 13, die Linsen 11 und 12 wieder zum Scanner 10 geleitet, nachdem in Abbildungsrichtung wiederum ein ruhender Lichtstrahl vorliegt. Dieser fällt durch das Emissionsfilter 9, welches hier zusätzlich die Funktion hat, die Fluoreszenzstrahlung im Beleuchtungsfleck 14 hinsichtlich ihrer Wellenlänge zu selektieren und der Beleuchtungsstrahlung des Laserstrahls 5, die beispielsweise als Anregungsstrahlung dienen kann, abzublocken. Eine Linse 16 sorgt dafür, dass insgesamt der Ort des Beleuchtungsflecks 14 in ein beugungsbegrenztes Beugungsbild 17 abgebildet wird, welches in einer Detektionsebene 18 liegt. Die Detektionsebene 18 ist eine konjugierte Ebene zur Fokalebene 29, in welcher der Beleuchtungsfleck 14 in der Probe 2 liegt.

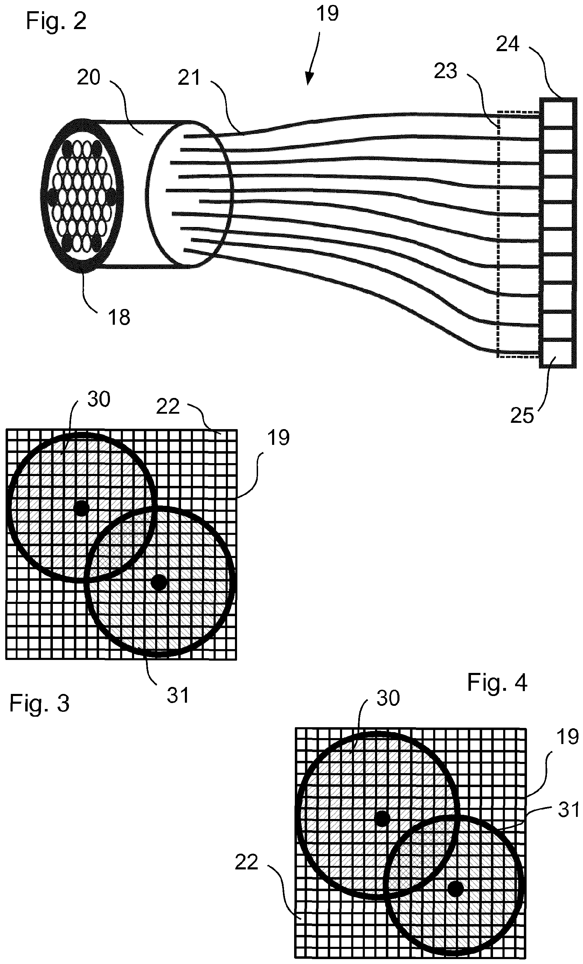

Das Beugungsbild 17 des Beleuchtungsflecks 14 wird in der Detektionsebene 18 von einem Flächendetektor 19 aufgenommen, dessen exemplarische Ausführung nachfolgend anhand der Figur 2 näher erläutert wird. Wesentlich ist hier, dass der Flächendetektor 19 das beugungsbegrenzte Bild 17 des Spots 14 in der Detektionsebene 18 räumlich auflöst, also eine Überabtastung bewirkt.

Das Steuergerät C steuert alle Komponenten des LSM 1, insbesondere Scanner 10 und Flächendetektor 19. Das Steuergerät nimmt für verschiedene Scanstellungen die Daten jedes einzelnen Bildes 17 auf, analysiert dessen Beugungsstruktur und erzeugt ein hochaufgelöstes Gesamtbild der Probe 2.

Das LSM 1 der Fig. 1 ist exemplarisch für einen einzigen Beleuchtungsfleck 14, der auf der Probe abgetastet wird, dargestellt. Es kann jedoch zugleich auch zur Abtastung gemäß einem Linien-Beleuchtungsfleck verwendet werden, der sich beispielsweise senkrecht zur Zeichnungsebene der Fig. 1 erstreckt. Auch ist es möglich, das LSM 1 der Fig. 1 so auszuführen, dass mehrere nebeneinanderliegende Punkt- Beleuchtungsflecke in der Probe abgetastet werden. Ihre entsprechenden Beugungsbilder 17 liegen dann in der Detektionsebene 18 ebenfalls nebeneinander. Der Flächendetektor 19 ist dann entsprechend ausgestaltet, um die nebeneinanderliegenden Beugungsbilder 17 in der Detektionsebene 18 zu erfassen.

Der Flächendetektor 19 ist vergrößert in Fig. 2 dargestellt. Er besteht aus einem Lichtleitfaserbündel 20, welches ein Detektorarray 24 speist. Das Lichtleitfaserbündel 20 ist aus Einzellichtfasern 21 aufgebaut. Die Enden der Lichtleitfasern 21 bilden den Lichtleitfaserbündeleingang 22, der in der Detektionsebene 18 liegt. Die einzelnen Enden der Lichtleitfasern 21 stellen somit Pixel dar, mit denen das Beugungsbild 17 des Beleuchtungsflecks 14 aufgenommen wird. Da der Beleuchtungsflecks 14 in der Ausführungsform der Fig. 1 exemplarisch ein Punkt-Spot ist, ist das Beugungsbild 17 ein Airy-Scheibchen, dessen Ausdehnung innerhalb des Kreises liegt, welcher in den Figuren 1 und 2 die Detektionsebene 18 veranschaulicht. Es sei darauf hingewiesen, dass Fig. 1 in dieser Hinsicht eine Vereinfachung enthält. Die Ausdehnung des Lichtleitfaserbündeleingangs 22 ist so groß, dass damit die Ausdehnung der Beugungsbild abgedeckt wird. Die einzelnen Lichtleitfasern 21 im Leichtleitfaserbündel 20 sind an ihren Ausgängen in eine andere geometrische Anordnung gebracht, als am Lichtleitfaserbündeleingang 22, nämlich in Form eines längserstreckten Steckers 23, in dem die ausgangsseitigen Enden der Lichtleitfasern 21 nebeneinander liegen. Der Stecker 23 ist passend zur geometrischen Anordnung der Detektorzeile 24 ausgebildet, d. h. jedes ausgangsseitige Ende einer Lichtleitfaser 21 liegt genau vor einem Pixel 25 der Detektorzeile 24.

Es sei darauf hingewiesen, dass die Ausführung des Flächendetektors 19 gemäß Fig. 2 rein exemplarisch ist. Grundsätzlich genügt für das Mikroskop 1 ein Flächendetektor 19, der in der Detektionsebene 18 eine Überabtastung des Beugungsbildes 17 vornimmt, das die beugungsbegrenzte Abbildung des mit dem Beleuchtungsspot 14 beleuchteten Punktes in der Fokalebene 29 erzeugt. Insbesondere kann es sich beim Flächendetektor 19 auch um eine rechteckige Detektorfläche in der Detektionsebene 18 handeln, wie es in den nachfolgend beschriebenen Fig. 4 bis 6 der Fall ist.

In der Beschreibung des Mikroskops 1 wurde bislang das Element 15 nicht erwähnt. Es handelt sich um ein spektralselektives Element, das in der Abbildungseinrichtung 4 oder in der Beleuchtungseinrichtung 3 angeordnet ist. Das spektralselektive Element 15 ist in der Darstellung der Fig. 1 für die Anordnung in der Beleuchtungseinrichtung 3 nur gestrichelt gezeigt. Nachfolgend wird zuerst die Wirkung und Anordnung des spektralselektiven Elementes 15 in der Abbildungseinrichtung 4 erläutert.

Ohne spektralselektives Element 15 entstünde bei der beugungsbegrenzten Abbildung des mit dem Beleuchtungsfleck 14 beleuchteten Punktes in der Fokalebene 29 in der zugeordneten konjugierten Detektionsebene 18 ein Beugungsbild 17, das aufgrund der kreisförmigen Appertur des Objektivs 13 ein Beugungsscheibchen ist. Die Entstehung solcher Beugungsscheibchen wurde im allgemeinen bei der Beschreibung bereits erläutert. Bei der Mikroskopie, wie sie in der EP 2317362 A1 beschrieben ist, wird durch Überabtastung des Beugungsbildes 17 dessen Struktur analysiert, und im Zusammenhang mit den Scanpositionen, die eine Schrittweite haben, welche klein gegen die minimale Abmessung des Beleuchtungsflecks 14 ist, kann eine Strukturaufklärung erfolgen, die über die Auflösungsgrenze der beugungsbegrenzten Abbildung hinaus geht. Zur Erläuterung seien gedanklich zwei Stellen betrachtet, die in der Fokalebene 29 so eng beieinander liegen, dass sie mit der beugungsbegrenzten Auflösung nicht erfasst werden können. Beim Scannen des Beleuchtungsflecks 14 mit Schrittweiten, die klein gegen den Durchmesser des (in diesem Gedankenexperiment kreisförmigen) Beleuchtungsflecks sind, gelangt zuerst eine der beiden Stellen in den Beleuchtungsfleck. Die Strahlungsintensität im Beugungsbild 17 steigt je mehr diese erste Stelle in den Beleuchtungsfleck 14 gerät. Der Beleuchtungsfleck 14 hat aufgrund seiner beugungsbegrenzten Eigenschaften eine Intensität, die zum Zentrum hin steigt. Somit steigt die Intensität der Strahlung im Beugungsbild 14 in dem Maß, in dem die betrachtete erste Stelle mehr und mehr ins Zentrum des Beleuchtungsflecks 14 rückt. Wenn das Zentrum des Beleuchtungsflecks 14 über die betrachtete Stelle hinweggewandert ist, nimmt die Intensität der Strahlung von dieser ersten Stelle wieder ab. Wäre die gedanklich angenommene zweite Stelle nicht benachbart, würde die Strahlungsintensität im Beugungsbild 17 wieder abklingen, wobei das Ansteigen und das Abnehmen der Strahlungsintensität im Beugungsbild 17 exakt mit dem Verlauf der Beleuchtungsintensität des Beleuchtungsflecks 14 (unter Berücksichtigung der Schrittweite und der Fluoreszenzempfindlichkeit der ersten Stelle) korreliert. Da nun aber eine zweite Stelle in enger Nachbarschaft vorhanden ist, beginnt diese zweite Stelle ebenfalls Fluoreszenzstrahlung zum Beugungsbild 17 beizusteuern, und zwar um so mehr, je näher ihr das Zentrum des Beleuchtungsflecks 14 rückt. Ansonsten gilt für die zweite Stelle natürlich genau das gleiche, wie für die erste Stelle. Im Ergebnis erhält man für die Schrittpositionen Beleuchtungsintensitäten im Beugungsbild 17, die anders sind, als wenn nur eine einzelne fluoreszierende Stelle vorhanden wäre. Durch die Auswertung der Daten des Flächendetektors 19 und Berücksichtigung der aktuellen Scanposition lässt sich damit mathematisch ermitteln, dass und auch in welchem Abstand zwei Stellen in der Fokalebene 29 fluoreszierten, obwohl diese zwei Stellen mit einer beugungsbegrenzten Auflösung für sich alleine nicht identifizierbar wären. In der dem Fachmann technisch bekannten Umsetzung wird zur Auswertung der Daten des Flächendetektors 19 für jede Scanposition eine Gleichung aufgestellt, die mehrere Unbekannte enthält, insbesondere Intensität und Abstand der Stellen in der Fokalebene 29. Durch die Vielzahl an Scanpositionen erhält man ein Gleichungssystem, das überbestimmt ist und es erlaubt, Strahlungsintensität und Abstand, d.h. damit auch die Lage, der fluoreszierenden Stellen zu ermitteln. Dies wird nachfolgend noch erläutert werden.

Dieses Prinzip einer hochauflösenden Mikroskopie ist mit dem Mikroskop 1 nun dahingehend fortgebildet, dass das spektralselektive Element 15 das Beugungsbild 17 in der Detektionsebene 18, welche der Fokalebene 29 konjugiert ist, so verändert, dass für zwei Wellenlängenbereiche (Farbkanäle) zwei Beugungsscheibchen entstehen, die gegeneinander verschoben sind. Damit stellt sich als Beugungsbild die in Fig. 3 gezeigte Situation dar. Auf dem Flächendetektor 19, der exemplarisch als quadratisches Array von Pixeln 22 gezeichnet ist, liegen zwei Beugungsscheibchen 30, 31 gegeneinander verschoben, wobei das eine Beugungsscheibchen 30 einem ersten Farbkanal und das zweite Beugungsscheibchen 31 einem zweiten Farbkanal zugeordnet ist. Die Wellenlängengrenzen dieser Farbkanäle sind durch das spektralselektive Element definiert, das deshalb in einer Ausführungsform passend zu vorbestimmten Farbkanälen (Wellenlängenbereichen) gewählt ist. Die Beugungsscheibchen 30, 31 sind in einer Ausführungsform gegeneinander so versetzt, dass ihre Zentren (markiert durch große runde Punkte) außerhalb des Überlappbereichs des jeweils anderen Beugungsscheibchens liegen.

Die Kombination aus den Beugungsscheibchen 30 und 31 ist das Beugungsbild 17, d.h. die Beugungsscheibchen bewegen sich während der Mikroskopie räumlich nicht. Das ursprünglich als einziges Beugungsscheibchen vorhandene Beugungsbild 17 im Mikroskop gemäß EP-A-2317362 ist nun durch die zwei Beugungsscheibchen 30 und 31 ersetzt.

Betrachtet man wieder gedanklich zwei in der Fokalebene 29 liegende Stellen, die so eng beabstandet sind, dass sie mit der beugungsbegrenzten Abbildung per se nicht auflösbar wären, stellt sich im Mikroskop 1 aufgrund des spektralselektiven Elementes 15 folgendes Verhalten ein, wenn man annimmt, dass die erste Stelle im ersten Farbkanal, dem das Beugungsscheibchen 30 zugeordnet ist, und die zweite Stelle im zweiten Farbkanal dem des Beugungsscheibchens 31 zugeordnet ist, fluoresziert: sobald der Beleuchtungsfleck 14 die erste Stelle erfasst, beginnt im Beugungsbild 17 das erste Beugungsscheibchen 30 aufzuleuchten. Das zweite Beugungsscheibchen 31 bleibt hingegen noch dunkel, da keine Strahlung im zweiten Farbkanal ankommt, so lange nicht auch die zweite Stelle vom Beleuchtungsfleck 14 beleuchtet wird. Die Intensität im Beugungsscheibchen 30 steigt so lange an, bis die erste Stelle vom Zentrum des Beleuchtungsflecks 14 erfasst wird. Dann ist die Intensität im Beugungsscheibchen 30 des ersten Farbkanals maximal. Analoges gilt für das Beugungsscheibchen 31 und den zweiten Farbkanal sowie die zweite Stelle. Im Ergebnis erhält man beim Überfahren der beiden Stellen mit dem Beleuchtungsfleck 14 ein Hellerwerden und wieder Verblassen des ersten Beugungsscheibchens 31 und ein zeitlich etwas später auftretendes Hellerwerden und Verblassen des zweiten Beugungsscheibchens 31.

Die Auswertung der Daten des Flächendetektors 19 in Kombination mit den Scanpositionen erlaubt damit für jede Scanposition eine Gleichung aufzustellen, die nicht nur Lage und Fluoreszenzintensität der beiden Stellen beinhaltet, sondern auch eine Aussage darüber, ob die erste oder zweite Stelle im ersten oder zweiten Farbkanal (a priori ist die Zuordnung ja nicht bekannt) leuchtet. Durch die Vielzahl an Scanpositionen ergibt sich wieder ein überbestimmtes Gleichungssystem, das es erlaubt, auch die zusätzliche Zuordnung der leuchtenden Stellen zu den beiden Farbkanälen zu ermitteln.

Auf diese Weise kann das Mikroskop 1 und das zugeordnete Mikroskopieverfahren zwischen zwei Wellenlängenbereichen (Farbkanälen) im hochaufgelösten Bild unterscheiden und gewinnt ohne zusätzliche Detektoren ein zweifarbiges Bild.

Es sei betont, dass der Abstand der Beugungsscheibchen 30 und 31 bei der Mikroskopie konstant bleibt, insbesondere skaliert der Abstand keine Farbinformation. Er dient lediglich dazu, dass die Beugungsscheibchen 30 und 31 räumlich nicht vollständig übereinanderliegen, da sie dann nicht unterscheidbar wären.

Es ist natürlich möglich Beugungsscheibchen so zu trennen, dass sie nicht überlappen. Dann braucht man allerdings einen vergleichsweise größeren Detektor.

Die Beugungsscheibchen 30 und 31 haben bei der Ausführungsform des spektralselektiven Elementes 15, wie es für die Fig. 3 zur Anwendung kommt, den gleichen Durchmesser. Im allgemeinen Teil der Beschreibung wurde jedoch erwähnt, dass die Größe eines Beugungsscheibchens von der Wellenlänge abhängt. Man würde deshalb eigentlich erwarten, dass das kurzwelligere Beugungsscheibchen (beispielsweise das Beugungsscheibchen 30) einen größeren Durchmesser haben müsste, als das längerwellige Beugungsscheibchen (beispielsweise das Beugungsscheibchen 31). Diese Situation liegt in Fig. 4 auch vor. In Fig. 3 ist sie nicht gegeben, da das spektralselektive Element 15 einen chromatischen Ausgleich bei der Aufspaltung der Strahlung erzeugt, der dafür sorgt, dass die Beugungsscheibchen 30 und 31 trotz ihrer unterschiedlichen Farbkanäle gleich groß sind.

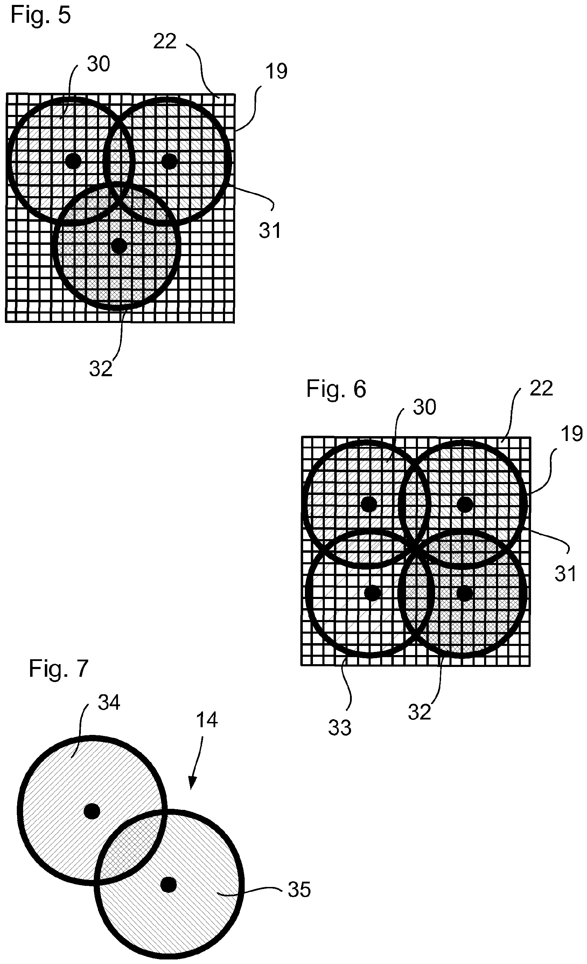

Der beschriebene Ansatz ist nicht nur auf die Verwendung von zwei Wellenlängenbereichen (Farbkanälen) eingeschränkt. Fig. 5 zeigt die Anordnung mit einem dritten Farbkanal 31, und in Fig. 6 ist auch ein vierter Farbkanal 33 vorhanden. Das eingangs Gesagte gilt hier gleichermaßen analog. Die mehreren Farbkanäle sind deshalb möglich, da aufgrund der Vielzahl von Scanpositionen das erhaltene Gleichungssystem derart überbestimmt ist, dass sozusagen noch Platz für weitere Unbekannte im Sinne von Farbkanälen ist.

In der bisherigen Beschreibung wurde davon ausgegangen, dass das spektralselektive Element 15 in der Abbildungseinrichtung 4 und dort in dem Teil des Strahlengangs ist, der ausschließlich für die Abbildung wirkt. Mit anderen Worten, das spektralselektive Element 15 wird in dieser Ausführungsform nicht von Beleuchtungsstrahlung durchsetzt. Die Farbkanäle, welche vom spektralselektiven Element 15 durch die Verschiebung der Beugungsscheibchen gegeneinander erzeugt wird, sind damit Farbkanäle der fluoreszierenden Probe. Diese Ausführungsformen des Mikroskops bzw. Mikroskopieverfahrens unterscheiden die fluoreszierende Strahlung hinsichtlich deren Wellenlängenbereich (Farbkanal).

Das spektralselektive Element 15 kann jedoch auch in der Beleuchtungseinrichtung 3 angeordnet werden. Diese Anordnung ist in Fig. 1 gestrichelt gezeichnet. Das spektralselektive Element liegt dann in einem Bereich des Strahlengangs, der ausschließlich von Beleuchtungsstrahlung durchsetzt wirkt, es wirkt damit nicht auf die Abbildung, sondern nur auf die Beleuchtung. Das spektralselektive Element 15 teilt dann den Beleuchtungsfleck 14 in zwei Beleuchtungsbeugungsscheibchen 34, 35 auf, wie es in der Darstellung der Fig. 7 gezeigt ist. Das spektralselektiven Element 15 im Beleuchtungsstrahlengang schafft damit Beleuchtungsfarbkanäle, wohingegen die Anordnung des spektralselektiven Elementes 15 im Abbildungsstrahlengang Detektionsfarbkanäle erzeugte. Die Probe wird dadurch nicht mehr mit einem z.B. Beugungsscheibchen beleuchtet, sondern mit zwei zueinander versetzten Beleuchtungsbeugungsscheibchen 34 und 35. Im Ergebnis erhält man damit auch auf dem Flächendetektor 19 eine Situation wie in Fig. 3, wobei die Beugungsscheibchen 30 und 31 nun nicht mehr unterschiedlichen Farbkanälen der Fluoreszenzstrahlung, d. h. Fluoreszenzantwort der Probe 2 entsprechen, sondern unterschiedlichen Farbkanälen der Anregung, d.h. Fluoreszenzempfindlichkeit der Probe 2. Ansonsten können alle Varianten, die anhand der Fig. 3 bis 6 für die Anordnung des spektralselektiven Elementes 15 in der Abbildungseinrichtung 4 erläutert wurden, gleichermaßen auch für die alternative Anordnung des spektralselektiven Elementes 15 in der Beleuchtungseinrichtung 3 verwendet werden. Aufgrund der anderen geometrischen Lage wird jedoch in der Regel die Ausgestaltung des spektralselektiven Elementes 15 bei Anordnung in der Abbildungseinrichtung 4 anders aussehen, als bei der Anordnung in der Beleuchtungseinrichtung 3. Grundsätzlich kommt für das spektralselektive Element 15 eine Vielzahl von Elementen in Frage, die einen chromatischen Effekt haben, beispielsweise ein Keil, ein Prisma, eine Einspiegelung oder ein Linsen-Dublett.

In einer Variante zu den oben genannten Alternativen kann das spektralselektive Element 15 auch in einen Teil des Strahlenganges gelegt werden, der sowohl bei der Beleuchtung als auch bei der Abbildung durchlaufen wird, oder es werden zwei spektralselektive Elemente 15 verwendet. Auf diese Weise kann ein Übersprechen bei der simultanen Anregung zweier Farbstoffe mit einer Wellenlänge unterdrückt werden. Zusätzlich ergeben sich Möglichkeiten für Kalibrationsmessungen.

Bei der Anordnung des spektralselektiven Elementes 15 in der Beleuchtungseinrichtung 3 kann der Fall eintreten, dass bei Beleuchtung mit zwei oder mehr Beleuchtungsfarbkanälen die kürzere Beleuchtungswellenlänge ein Fluoreszenzsignal im Wellenlängenbereich der erzeugten Fluoreszenz von der langwelligeren Beleuchtung generiert. Die Folge davon wäre, dass eine der Strukturen als verschobenes Schattenbild noch einmal auftaucht. Mittels einer geeigneten Korrelationsrechnung kann der Schattenbildanteil bestimmt und eliminiert werden.

Die Ausführungsform gemäß Fig. 3 und 4 zeigt, dass es bevorzugt ist, die Verschiebung der Beugungsschei-chen längs der Diagonale des Flächendetektors 19 auszuführen, da dann dessen Fläche maximal genutzt werden kann.

Bei der Verwendung eines Flächendetektors 19 mit Lichtleitfasern, wie er in Fig. 2 exemplarisch gezeigt ist, ist es bevorzugt, die Fasern so zu verlegen, dass die nicht überlappenden Bereiche der zwei Beugungsscheibchen auf Detektorelemente geleitet werden, die möglichst nicht nebeneinander liegen, d.h. die nicht überlappenden Bereiche des Beugungsscheibchens 30 werden auf eine erste Gruppe von Detektorelementen geleitet, und die nicht überlappenden Bereiche des Beugungsscheibchens 31 auf eine zweite Gruppe von Detektorelementen, wobei die beiden Gruppen möglichst nicht ineinander verschachtelt sind.

Zur genaueren Erläuterung der mathematischen Analyse der Aufstellung des Gleichungssystems sei zur Einführung zuerst der Fall betrachtet, dass nur eine Farbe auftritt, d.h. das spektralselektive Element 15 fehlt. Bezeichnet man mit $O(\mathbf{r})$ das Objekt, mit $E(r)$ die Punktbildverwaschungsfunktion (PSF) der Anregung und mit $H(\mathbf{r})$ die PSF der Detektion, erhält man als Signal $D(r,p)$ für jeden Bildpunkt folgende Gleichung, wobei r den Abstand vom Ort p des Beleuchtungsflecks bezeichnet:

$$D(\mathbf{r},\mathbf{p}) = \int_{\mathbf{r}} O(\mathbf{p} - \mathbf{r}')E(\mathbf{r}')H(\mathbf{r}' + \mathbf{r})d\mathbf{r}'$$

$$(1)$$

Eine Fourier-Transformation von D(r,p) bezüglich des Ortes p liefert:

$$D(\mathbf{r},\omega) = O(\omega)FT_{\mathbf{r}'}\{E(\mathbf{r}')H(\mathbf{r}' + \mathbf{r})\}$$

$$(2)$$

Das Produkt im Realraum wird im Fourier-Raum die folgende Faltung:

$$D(\mathbf{r},\omega) = O(\omega)\int_{\omega} E(\omega')H(\omega - \omega')e^{i(\omega-\omega')\mathbf{r}}d\omega'$$

$$(3)$$

Führt man eine Trägerfunktion am Ort **r** ein:

$$EH(\mathbf{r},\omega) = FT_{\mathbf{r}'}\{E(\mathbf{r}')H(\mathbf{r}'+\mathbf{r})\}$$

(4)

ergibt sich als Gleichung (2)

$$D(\mathbf{r},\omega) = O(\omega)EH(\mathbf{r},\omega)$$

(5)

Unterschiedliche Orte r am Flächendetektor werden mittels eines Wiener-Filter kombiniert

$$\tilde{O}(\omega) = \frac{\sum_{\mathbf{r}} D(\mathbf{r},\omega)EH^*(\mathbf{r},\omega)}{\left\langle |n(\omega)|^2 \right\rangle \Big/ \left\langle |O(\omega)|^2 \right\rangle + \sum_{\mathbf{r}} |EH(\mathbf{r},\omega)|^2},$$

(6)

wobei $\langle |O(\omega)|^2 \rangle$ und $\langle |n(\omega)|^2 \rangle$ die entsprechenden spektralen Leistungsdichten des Signals ("O") und des Rauschens (n) sind.

Dies vorausgeschickt erhält man für mehrere Farbkanäle, die an jedem Pixel des Flächendetektors 19 gemischt werden, die durch die PSF vorgegebenen Gewichte wie folgt:

$$D(\mathbf{r},\omega) = \sum_c O_c(\omega)EH_c(\mathbf{r},\omega)$$

(7)

In dieser Gleichung ist c der Farbkanalindex. Schreibt man die Gleichung (7) als Matrix erhält man:

$$[D(\mathbf{r},\omega)]_{\mathbf{r}} = [O_c(\omega)]_c [EH_c(\mathbf{r},\omega)]_{c,\mathbf{r}}$$

(8)

Berücksichtigt man zusätzliches Rauschen nimmt Gleichung (8) folgende Form an:

$$[\tilde{D}(\mathbf{r},\omega)]_{\mathbf{r}} = [O_c(\omega)]_c [EH_c(\mathbf{r},\omega)]_{c,\mathbf{r}} + [N(\mathbf{r},\omega)]_{\mathbf{r}}$$

(9)

Das Objekt $[O_c(\omega)]_c$ kann man mittels eines Operators $[G_c(\mathbf{r},\omega)]_{\mathbf{r},c}$ gewinnen, der eine Frequenzfilterung und eine Farbkanalentmischung kombiniert:

$$[O_c(\omega)]_c = [G_c(\mathbf{r},\omega)]_{\mathbf{r},c} [\tilde{D}(\mathbf{r},\omega)]_{\mathbf{r}}.$$

(10)

Wie bei der Ableitung des Wiener-Filters muss nun der quadratische Abstand zwischen dem rekonstruierten und dem wirklichen Objekt für jede Frequenz und jeden Farbkanal minimiert werden:

$$E\left|\left[O_c(\omega)\right]_c - \left[\tilde{D}(\mathbf{r},\omega)\right]_\mathbf{r}\left[G_c(\mathbf{r},\omega)\right]_{\mathbf{r},c}\right|^2 = \min$$

$$(11)$$

Unter Verwendung der Gleichung (9) erhält man damit:

$$E\left|\left\{\left[O_c(\omega)\right]_c\left[EH_c(\mathbf{r},\omega)\right]_{c,\mathbf{r}} + \left[N(\mathbf{r},\omega)\right]_\mathbf{r}\right\}\left[G_c(\mathbf{r},\omega)\right]_{\mathbf{r},c} - \left[O_c(\omega)\right]_c\right|^2 = \min$$

$$(12)$$

Unter Anwendung der selben Grundsätze wie bei der Ableitung des Wiener-Filters, die dem Fachmann beispielsweise aus http://en.wikipedia.org/wiki/Wiener_deconvolution bekannt sind, erhält man:

$$\left[O_c(\omega)\right]_c = \left[D(\mathbf{r},\omega)\right]_\mathbf{r}\left\{\left[EH_c(\mathbf{r},\omega)\right]_{c,\mathbf{r}}^*\left[I\right]_c\left[EH_c(\mathbf{r},\omega)\right]_{c,\mathbf{r}} + \left[\sigma^2\right]_\mathbf{r}\right\}^{-1}\left[EH_c(\mathbf{r},\omega)\right]_{c,\mathbf{r}}^*\left[I\right]_c$$

$$(13)$$

Hierin sind $[I]_c$ und $[\sigma^2]_\mathbf{r}$ die spektralen Leistungsdichten des Signals für jeden Farbkanal und das Rauschen:

$$\left[I\right]_c = E\left|\left[O_c(\omega)\right]_c\right|^2; \quad \left[\sigma^2\right]_\mathbf{r} = E\left|\left[N(\mathbf{r},\omega)\right]_\mathbf{r}\right|^2$$

$$(14)$$

Wenn Emissionsspektren von Fluorophoren überlappen, kann es sein, dass in einem Farbkanal Schatten eines Objekts aus dem anderen Farbkanal auftreten. Solche Schattenbilder werden mit derselben Detektions-PSF verzerrt, wie das Hauptbild im eigentlichen Farbkanal. Dadurch ist ein im Kanal c, $O_c(\omega)$ detektiertes Bild eine Überlagerung der Bilder $O_c^{TRUE}(\omega)$ entsprechend den den unterschiedlichen Farbkanälen zugeordneten Objekten:

$$\left[O_c(\omega)\right]_c = \left[M\right]_c\left[O_c^{TRUE}(\omega)\right]_c$$

$$(15)$$

Hier ist $[M]_c$ eine Entmischungsmatrix. Bei beispielsweise zwei Farben erhält man dann:

$$\begin{cases} O_1(\omega) = m_{11}O_1^{TRUE}(\omega) + m_{12}O_2^{TRUE}(\omega) \\ O_2(\omega) = m_{21}O_1^{TRUE}(\omega) + m_{22}O_2^{TRUE}(\omega) \end{cases}$$

$$(16)$$

Die wahren Bilder $O_c^{TRUE}(\omega)$ zu gewinnen ist einfach, wenn deren Mischungsmatrix $[M]_c$ bekannt ist. Ist dies nicht der Fall, kann sie durch Minimierung einer Kreuzkorrelation zwischen den erzeugten Bildern gewonnen werden, d.h. die Matrix ist so zu bestimmen, dass ihre Werte die niedrigste Kreuzkorrelation für die am besten entmischten Objekte sicherstellt.

**Patentansprüche**

1. Verfahren zur hochauflösenden Scanning-Mikroskopie einer Probe (2), wobei

- die Probe (2) mit Beleuchtungsstrahlung (5) derart zur Abgabe von Fluoreszenzstrahlung angeregt wird, dass die Beleuchtungsstrahlung an einen Punkt in oder auf der Probe (2) zu einem beugungsbegrenzten Beleuchtungsfleck (14) gebündelt wird,

- der Punkt beugungsbegrenzt in ein Beugungsbild (17) auf einen ortsauflösenden Flächendetektor (19) abgebildet wird, wobei der Flächendetektor (19) eine Ortsauflösung aufweist, die eine Beugungsstruktur (30-33) des Beugungsbildes (17) auflöst,

- der Punkt relativ zur Probe (2) in verschiedene Scanpositionen mit einer Schrittweite verschoben wird, die kleiner ist als der halbe Durchmesser des Beleuchtungsflecks (14),

- der Flächendetektor (19) ausgelesen und aus den Daten des Flächendetektors (19) und aus den diesen Daten zugeordneten Scanpositionen ein Bild der Probe (2) erzeugt wird, das eine Auflösung aufweist, die über eine Auflösungsgrenze der Abbildung gesteigert ist, **dadurch gekennzeichnet, dass**

- zum Unterscheiden von mindestens zwei vorbestimmten Wellenlängenbereichen in der Fluoreszenzstrahlung von der Probe (2) mittels eines spektral selektiven Elements (15) auf dem Flächendetektor (19) für die mindestens zwei vorbestimmten Wellenlängenbereiche eine entsprechende Anzahl von Beugungsscheibchen (30-33) erzeugt werden, die lateral gegeneinander versetzt sind, so dass das Beugungsbild (17) aus den gegeneinander versetzten Beugungsscheibchen (30-33) besteht, wobei die Beugungsscheibchen (30-33) vollständig auf dem Flächendetektor (19) liegen, und sich die Beugungsscheibchen (30-33) überlappen, aber nicht vollständig überdecken, und

- beim Erzeugen des Bildes der Probe (2) die Beugungsscheibchen (30-33) ausgewertet werden durch

- Aufstellen eines Gleichungssystems auf Basis einer Auswertung der Daten des Flächendetektors (19), wobei für jede Scanposition eine Gleichung aufgestellt wird, wobei jede Gleichung von fluoreszierenden Stellen Lage, Fluoreszenzintensität und Zuordnung zum Wellenlängenbereich als Unbekannte enthält, und
- Lösen des Gleichungssystems zur Erzeugung des Bildes der Probe (2) in den Wellenlängenbereichen.

2. Verfahren nach Anspruch 1, **dadurch gekennzeichnet, dass** das spektral selektive Element (15) die Beugungsscheibchen (30-33) auf dem Flächendetektor (19) so beabstandet, dass das Zentrum jedes Beugungsscheibchens (30-33) außerhalb dem/den anderen Beugungsscheibchen (30-33) liegt/liegen.

3. Verfahren nach einem der Ansprüche 1 oder 2, **dadurch gekennzeichnet, dass** das spektral selektive Element (15) chromatisch derart korrigiert ist, dass die gegeneinander versetzten Beugungsscheibchen (30-33) die gleiche Größe haben.

4. Verfahren nach einem der Ansprüche 1 bis 3, **dadurch gekennzeichnet, dass** das spektral selektive Element (15) nur die Beleuchtung derart beeinflusst, dass der Beleuchtungsfleck (14) aus Beleuchtungsbeugungsscheibchen (34, 35) besteht, die lateral gegeneinander versetzt sind.

5. Verfahren nach einem der Ansprüche 1 bis 3, **dadurch gekennzeichnet, dass** das spektral selektive Element (15) nur die Abbildung beeinflusst, insbesondere dem Flächendetektor (19) vorgeordnet ist.

6. Verfahren nach einem der obigen Ansprüche, **dadurch gekennzeichnet, dass** die lateral gegeneinander versetzten Beugungsscheiben (30-33) in einer gemeinsamen Bildebene liegen.

7. Mikroskop zur hochauflösenden Scanning-Mikroskopie mit

- einem Probenraum zur Aufnahme einer Probe (2), die zur Abgabe von Fluoreszenzstrahlung anregbar ist,
- einer Optik (11-13), die ein im Probenraum liegende Fokalebene (29) und eine Auflösungsgrenze hat,
- einer Beleuchtungseinrichtung (3), die einen Eingang (6) zum Zuführen von Beleuchtungsstrahlung (5) aufweist und die über die Optik (11-13) den Probenraum mit der Beleuchtungsstrahlung (5) derart beleuchtet, dass die Optik (11-13) die Beleuchtungsstrahlung (5) an einem Punkt in der Fokalebene (29) zu einem beugungsbegrenzten Beleuchtungsfleck (14) bündelt,
- einer Abbildungseinrichtung ( ,4) zum beugungsbegrenzten Abbilden des Punktes in der Fokalebene (29) durch die Optik (11-13) in ein Beugungsbild (30-33) auf einem ortsauflösenden Flächendetektor (19), der in einer zur Fokalebene (29) konjugierten Detektorebene (18) liegt, wobei der Flächendetektor (19) eine Ortsauflösung aufweist, die eine Beugungsstruktur des Beugungsbildes (30-33) auflöst,
- einer Scaneinrichtung (10) zur Verschiebung des Punktes in verschiedene Scanpositionen mit einer Schrittweite, die kleiner ist als der halbe Durchmesser des Beleuchtungsflecks (14),
- einer Auswerteeinrichtung (C) zum Auslesen des Flächendetektors (19), zum Auswerten der Beugungsstruktur des Beugungsbildes (30-33) aus Daten des Flächendetektors (19) und aus den diesen Daten zugeordneten Scanpositionen und zum Erzeugen eines Bildes der Probe (2), das eine Auflösung aufweist, die über die Auflösungsgrenze gesteigert ist,

**dadurch gekennzeichnet, dass**

- das Mikroskop (1) zum Unterscheiden von mindestens zwei vorbestimmten Wellenlängenbereichen in der Fluoreszenzstrahlung von der Probe (2) ein spektral selektives Element (15) aufweist, das auf dem Flächendetektor (19) für die mindestens zwei vorbestimmten Wellenlängenbereiche eine entsprechende Anzahl von Beugungsscheibchen (30-33) erzeugt, die lateral gegeneinander versetzt sind, so dass das Beugungsbild (17) aus den gegeneinander versetzten Beugungsscheibchen (30-33) besteht,

- wobei der Flächendetektor (19) und das spektral selektive Element (15) so ausgebildet sind, dass die Beugungsscheibchen (30-33) vollständig auf dem Flächendetektor liegen, und sich die Beugungsscheibchen (30-33) überlappen, aber nicht vollständig überdecken, und

- die Auswerteeinrichtung (C) ausgebildet ist, beim Erzeugen des Bildes der Probe (2) die Beugungsscheibchen (30-33) auszuwerten durch

- Aufstellen eines Gleichungssystems auf Basis einer Auswertung der Daten des Flächendetektors (19), wobei für jede Scanposition eine Gleichung aufgestellt wird, wobei jede Gleichung von fluoreszierenden Stellen Lage, Fluoreszenzintensität und Zuordnung zum Wellenlängenbereich als Unbekannte enthält, und

- Lösen des Gleichungssystems zur Erzeugung des Bildes der Probe (2) in den Wellenlängenbereichen.

8. Mikroskop nach Anspruch 7, **dadurch gekennzeichnet, dass** das spektral selektive Element (15) die Beugungsscheibchen (30-33) auf dem Flächendetektor (19) so beabstandet, dass das Zentrum jedes Beugungsscheibchens (30-33) außerhalb dem/den anderen Beugungsscheibchen (30-33) liegt/liegen.

9. Mikroskop nach einem der Ansprüche 7 oder 8, **dadurch gekennzeichnet, dass** das spektral selektive Element (15) chromatisch derart korrigiert ist, dass die gegeneinander versetzten Beugungsscheibchen (30-33) die gleiche Größe haben.

10. Mikroskop nach einem der Ansprüche 7 bis 9, **dadurch gekennzeichnet, dass** das spektral selektive Element (15) in der Beleuchtungseinrichtung (3), nicht aber in der auch für die Abbildung wirkenden Optik (11-13) angeordnet ist, so dass der Beleuchtungsfleck (14) aus Beleuchtungsbeugungsscheibchen (34, 35) besteht, die lateral gegeneinander versetzt sind.

11. Mikroskop nach einem der Ansprüche 7 bis 9, **dadurch gekennzeichnet, dass** das spektral selektive Element (15) in der Abbildungseinrichtung (4), nicht aber in der auch für die Beleuchtung wirkenden Optik (11-13) angeordnet ist.

12. Mikroskop nach einem der Ansprüche 7 bis 11, **dadurch gekennzeichnet, dass** spektral selektive Element (15) ein Gitter, ein Prisma, eine Keilplatte und/oder ein Linsen-Dublett aufweist.

13. Mikroskop nach einem der obigen Ansprüche, **dadurch gekennzeichnet, dass** die lateral gegeneinander versetzten Beugungsscheiben (30-33) in einer gemeinsamen Bildebene liegen.

**Claims**

1. A method for high-resolution scanning microscopy of a sample (2), wherein

- the sample (2) is excited by illumination radiation to emit fluorescent radiation, wherein the illumination radiation is focused to a point in or on the sample (2) to form a diffraction-limited illumination spot (14),

- the point is imaged to a diffraction image (17) on a spatially resolving two-dimensional detector (19) in diffraction-limited manner, wherein the two-dimensional detector (19) has a spatial resolution which resolves a diffraction structure (30-33) of the diffraction image (17),

- the point is displaced into various scanning positions relative to the sample (2) with an increment which is smaller than half a diameter of the illumination spot (14),

- the two-dimensional detector (19) is read and an image of the sample with a resolution which is increased beyond a resolution limit of the imaging is generated from data of the two-dimensional detector (19) and from the scanning positions assigned to these data, **characterized in that**

- for the purposes of discriminating between at least two predetermined wavelength ranges in the fluorescent radiation of the sample (2), a number of Airy disks (30-33) with the number corresponding to the at least two predetermined wavelength ranges are generated on the two-dimensional detector (19) by means of a spectrally selective element (15), which Airy disks are offset laterally from one another such that the diffraction image (17) consists of the mutually offset Airy disks (30-33), wherein the Airy disks (30-33) lie completely on the two-dimensional detector (19) and overlap but do not cover each other completely, and
- the Airy disks (30-33) are evaluated when generating the image of the sample (2) by

    - setting up a system of equations on basis of evaluating the data from the two-dimensional detector (19), where one equation is set up for each scanning position and each equation of the fluorescent spot comprises position, fluorescence intensity and assignment to the wavelengths range as the unknowns, and
    - solving the system of equations to generate the image of the sample (2) in the wavelength ranges.

2. The method according to claim 1, **characterized in that** the spectrally selective element (15) spaces the Airy disks (30-33) apart on the two-dimensional detector (19) such that the centre of each Airy disk (30-33) lies outside the other Airy disk(s) (30-33).

3. The method according to one of claims 1 or 2, **characterized in that** the spectrally selective element (15) is chromatically corrected in such a way that the mutually offset Airy disks (30-33) have the same size.

4. The method according to one of claims 1 to 3, **characterized in that** the spectrally selective element (15) only modifies illumination in such a way that the illumination spot (14) consists of illumination Airy disks (34, 35) which are offset laterally from one another.

5. The method according to one of claims 1 to 3, **characterized in that** the spectrally selective element (15) only influences the imaging, in particular is arranged upstream of the two-dimensional detector (19).

6. The method according to one of the above claims, **characterized in that** the Airy disks (30-33) offset laterally from one another lie in a common image plane.

7. A microscope for high-resolution scanning microscopy, the microscope comprising

    - a sample space for receiving a sample (2) which can be excited to emit fluorescent radiation,
    - optics (11-13) comprising a focal plane (29) lying in the sample space and a resolution limit,
    - an illumination device (3) comprising an input (6) for receiving illumination radiation (5) and illuminating the sample space with the illumination radiation (5) via the optics (11-13), wherein the optics (11-13) focuses the illumination radiation (5) to a diffraction-limited illumination spot (14) at a point in the focal plane (29),
    - an imaging apparatus (4) for imaging the point in the focal plane (29) in diffraction-limited manner through the optics (11-13) to a diffraction image (30-33) on a spatially resolving two-dimensional detector (19) which lies in a detector plane (18) conjugate with the focal plane (29), wherein the two-dimensional detector (19) has a spatial resolution which resolves a diffraction structure of the diffraction image (30-33),
    - a scanning device (10) for displacing the point into various scanning positions with an increment which is smaller than the diameter of the illumination spot (14),
    - an evaluation device (C) for reading the two-dimensional detector (19), for evaluating the diffraction structure of the diffraction image (30-33) from data of the two-dimensional detector (19) and from the scanning positions assigned to these data and for generating an image of the sample (2) with a resolution which is increased beyond the resolution limit,
    **characterized in that**
    - for the purposes of discriminating between at least two predetermined wavelength ranges in the fluorescent radiation of the sample (2), the microscope (1) comprises a spectrally selective element (15) which generates a number of Airy disks (30-33) corresponding to the at least two predetermined wavelength ranges on the two-dimensional detector (19), which Airy disks (30-33) are offset laterally from one another such that the diffraction image (17) consists of the mutually offset Airy disks (30-33),
    - wherein the two-dimensional detector (19) and the spectrally selective element (15) are formed such that the Airy disks (30-33) lie completely on the two-dimensional detector (19) and overlap but do not cover each other completely, and
    - the evaluation device (C) is configured to analyze the Airy disks (30-33) when generating the image of the sample (2) by

- setting up a system of equations on basis of evaluating the data from the two-dimensional detector (19), where one equation is set up for each scanning position and each equation of the fluorescent spot comprises position, fluorescence intensity and assignment to the wavelengths range as the unknowns, and
- solving the system of equations to generate the image of the sample (2) in the wavelength ranges.

8. The microscope according to claim 7, **characterized in that** the spectrally selective element (15) spaces the Airy disks (30-33) apart on the two-dimensional detector (19) such that the centre of each Airy disk (30-33) lies outside the other Airy disk(s) (30-33).

9. The microscope according to one of claims 7 or 8, **characterized in that** the spectrally selective element (15) is chromatically corrected in such a way that the mutually offset Airy disks (30-33) have the same size.

10. The microscope according to one of claims 7 to 9, **characterized in that** the spectrally selective element (15) is arranged in the illumination device (3) but not in the optics (11-13) which also act for the imaging with the result that the illumination spot (14) consists of illumination Airy disks (34, 35) which are offset laterally from one another.

11. The microscope according to one of claims 7 to 9, **characterized in that** the spectrally selective element (15) is arranged in the imaging device (4) but not in the optics (11-13) which also acts for the illumination.

12. The microscope according to one of claims 7 to 11, **characterized in that** the spectrally selective element (15) comprises a grating, a prism, a wedge plate and/or a doublet lens.

13. The microscope according to one of the above claims, **characterized in that** the Airy disks (30-33) offset laterally from one another lie in a common image plane.


**Revendications**

1. Procédé de microscopie par balayage à haute résolution d'un échantillon (2),

- l'échantillon (2) étant excité avec un rayonnement d'éclairage (5) en vue de délivrer un rayonnement de fluorescence de telle sorte que le rayonnement d'éclairage est focalisé en une tache d'éclairage (14) à diffraction limitée en un point dans ou sur l'échantillon (2),
- le point étant représenté avec limitation de la diffraction dans une image diffractée (17) sur un détecteur bidimensionnel (19) à résolution spatiale, le détecteur bidimensionnel (19) présentant une résolution spatiale qui résout une structure de diffraction (30-33) de l'image diffractée (17),
- le point étant décalé par rapport à l'échantillon (2) dans différentes positions de balayage avec une largeur de pas qui est inférieure à la moitié du diamètre de la tache d'éclairage (14),
- le détecteur bidimensionnel (19) étant lu et une image de l'échantillon (2) étant générée à partir des données du détecteur bidimensionnel (19) et à partir des positions de balayage associées à ces données, laquelle présente une résolution qui a augmenté au-dessus de la limite de résolution de la représentation,
**caractérisé en ce que**
- pour différencier au moins deux plages de longueurs d'onde prédéterminées dans le rayonnement de fluorescence de l'échantillon (2), un nombre correspondant de rondelles de diffraction (30-33), lesquelles sont décalées latéralement les unes par rapport aux autres de telle sorte que l'image diffractée (17) se compose des rondelles de diffraction (30-33) décalées les unes par rapport aux autres, est généré au moyen d'un élément à sélectivité spectrale (15) sur le détecteur bidimensionnel (19) pour les au moins deux plages de longueurs d'onde prédéterminées, les rondelles de diffraction (30-33) reposant entièrement sur le détecteur bidimensionnel (19) et les rondelles de diffraction (30-33) se chevauchant, mais ne se recouvrant pas entièrement, et
- lors de la génération de l'image de l'échantillon (2), les rondelles de diffraction (30-33) sont interprétées par

- établissement d'un système d'équations sur la base d'une interprétation des données du détecteur bidimensionnel (19), une équation étant établie pour chaque position de balayage, chaque équation contenant comme inconnues des positions fluorescentes la position, l'intensité de fluorescence et l'affectation à la plage de longueurs d'onde, et
- résolution du système d'équations en vue de générer l'image de l'échantillon (2) dans les plages de longueurs d'onde.

**2.** Procédé selon la revendication 1, **caractérisé en ce que** l'élément à sélectivité spectrale (15) espace les rondelles de diffraction (30-33) sur le détecteur bidimensionnel (19) de telle sorte que le centre de chaque rondelle de diffraction (30-33) se trouve en-dehors de l'autre ou des autres rondelles de diffraction (30-33).

**3.** Procédé selon l'une des revendications 1 ou 2, **caractérisé en ce que** l'élément à sélectivité spectrale (15) est corrigé chromatiquement de telle sorte que les rondelles de diffraction (30-33) décalées les unes par rapport aux autres ont la même taille.

**4.** Procédé selon l'une des revendications 1 à 3, **caractérisé en ce que** l'élément à sélectivité spectrale (15) n'influence l'éclairage que de sorte que la tache d'éclairage (14) ne se produise que sur les rondelles de diffraction d'éclairage (34, 35) qui sont décalées latéralement les unes par rapport aux autres.

**5.** Procédé selon l'une des revendications 1 à 3, **caractérisé en ce que** l'élément à sélectivité spectrale (15) n'influence que la représentation, notamment est disposé en amont du détecteur bidimensionnel (19).

**6.** Procédé selon l'une des revendications précédentes, **caractérisé en ce que** les rondelles de diffraction (30-33) décalées latéralement les unes par rapport aux autres se trouvent dans un plan d'image commun.

**7.** Microscope pour la microscopie par balayage à haute résolution, comprenant

- un espace à échantillon destiné à accueillir un échantillon (2) qui peut être excité en vue de délivrer un rayonnement de fluorescence,
- une optique (11-13), qui comporte un plan focal (29) se trouvant dans l'espace à échantillon et une limite de résolution,
- un dispositif d'éclairage (3), qui possède une entrée (6) destinée à l'acheminement d'un rayonnement d'éclairage (5) et éclaire l'espace à échantillon avec le rayonnement d'éclairage (5) par le biais de l'optique (11-13) de telle sorte que l'optique (11-13) focalise le rayonnement d'éclairage (5) en une tache d'éclairage (14) au niveau d'un point dans le plan focal (29),
- un dispositif de représentation (4) destiné à la représentation avec limitation de la diffraction du point dans le plan focal (29) par l'optique (11-13) dans une image diffractée (30-33) sur un détecteur bidimensionnel (19) à résolution spatiale, lequel se trouve dans un plan de détecteur (18) conjugué par rapport au plan focal (29), le détecteur bidimensionnel (19) présentant une résolution spatiale qui résout une structure de diffraction de l'image diffractée (30-33),
- un dispositif de balayage (10) destiné à décaler le point dans différentes positions de balayage avec une largeur de pas qui est inférieure à la moitié du diamètre de la tache d'éclairage (14),
- un dispositif d'interprétation (C) destiné à lire le détecteur bidimensionnel (19), à interpréter la structure de diffraction de l'image diffractée (30-33) à partir des données du détecteur bidimensionnel (19) et à partir des positions de balayage associées à ces données, et à générer une image de l'échantillon (2), laquelle présente une résolution qui a augmenté au-dessus de la limite de résolution,
**caractérisé en ce que**
- le microscope (1), pour différencier au moins deux plages de longueurs d'onde prédéterminées dans le rayonnement de fluorescence de l'échantillon (2), possède un élément à sélectivité spectrale (15), qui génère sur le détecteur bidimensionnel (19), pour les au moins deux plages de longueurs d'onde prédéterminées, un nombre correspondant de rondelles de diffraction (30-33), lesquelles sont décalées latéralement les unes par rapport aux autres de telle sorte que l'image diffractée (17) se compose des rondelles de diffraction (30-33) décalées les unes par rapport aux autres,
- le détecteur bidimensionnel (19) et l'élément à sélectivité spectrale (15) étant configurés de telle sorte que les rondelles de diffraction (30-33) reposent entièrement sur le détecteur bidimensionnel et les rondelles de diffraction (30-33) se chevauchent, mais ne se recouvrent pas entièrement, et
- le dispositif d'interprétation (C) est configuré pour interpréter les rondelles de diffraction (30-33) lors de la génération de l'image de l'échantillon (2), par

- établissement d'un système d'équations sur la base d'une interprétation des données du détecteur bidimensionnel (19), une équation étant établie pour chaque position de balayage, chaque équation contenant comme inconnues des positions fluorescentes la position, l'intensité de fluorescence et l'affectation à la plage de longueurs d'onde, et
- résolution du système d'équations en vue de générer l'image de l'échantillon (2) dans les plages de longueurs d'onde.

**8.** Microscope selon la revendication 7, **caractérisé en ce que** l'élément à sélectivité spectrale (15) espace les rondelles de diffraction (30-33) sur le détecteur bidimensionnel (19) de telle sorte que le centre de chaque rondelle de diffraction (30-33) se trouve en-dehors de l'autre ou des autres rondelles de diffraction (30-33).

**9.** Microscope selon l'une des revendications 7 et 8, **caractérisé en ce que** l'élément à sélectivité spectrale (15) est corrigé chromatiquement de telle sorte que les rondelles de diffraction (30-33) décalées les unes par rapport aux autres ont la même taille.

**10.** Microscope selon l'une des revendications 7 à 9, **caractérisé en ce que** l'élément à sélectivité spectrale (15) est disposé dans le dispositif d'éclairage (3), mais pas dans l'optique (11-13) agissant également pour la représentation, de sorte que la tache d'éclairage (14) se compose de rondelles de diffraction d'éclairage (34, 35) qui sont décalées latéralement les unes par rapport aux autres.

**11.** Microscope selon l'une des revendications 7 à 9, **caractérisé en ce que** l'élément à sélectivité spectrale (15) est disposé dans le dispositif de représentation (4), mais pas dans l'optique (11-13) agissant également pour la représentation.

**12.** Microscope selon l'une des revendications 7 à 11, **caractérisé en ce que** l'élément à sélectivité spectrale (15) possède une grille, un prisme, une clavette et/ou un doublet de lentilles.

**13.** Microscope selon l'une des revendications ci-dessus, **caractérisé en ce que** les rondelles de diffraction (30-33) décalées latéralement les unes par rapport aux autres se trouvent dans un plan d'image commun.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5043570 A
- US 5866911 A
- DE 4416558 B
- US 6633432 A
- DE 10325460 A
- US 5867604 A
- EP 1157297 B
- WO 2006127692 A

- DE 102006021317 A
- EP 2317362 A
- WO 2013135487 A
- WO 214811 A
- EP 2037255 A
- DE 102012023024 A
- EP 2317362 A1

**In der Beschreibung aufgeführte Nicht-Patentliteratur**

- **VERFAHREN SIND IN HELL.** Far-Field Optical Nanoscopy. *Science,* 2007, vol. 316, 1153-1158